# EUROPEAN PATENT SPECIFICATION

(11) **EP 1 786 535 B1**
(45) Date of publication and mention of the grant of the patent: **15.08.2012**
(21) Application number: 05772386.8
(22) Date of filing: 22.08.2005
(51) Int. Cl.: B01D 24/46

(54) **PROCESS FOR IN-SITU CLEANING OF DRINKING WATER FILTRATION MEDIA**
VERFAHREN ZUR IN-SITU-REINIGUNG VON TRINKWASSERFILTERANLAGEN
PROCEDE DE NETTOYAGE IN SITU DE MEDIAS DE FILTRATION D'EAU POTABLE

(30) Priority: 24.08.2004 US 926272
(43) Date of publication of application: 23.05.2007
(60) Divisional application: 12154414.2
(73) Proprietor: BLUE EARTH LABS, LLC, Las Vegas NV 89147 (US)
(72) Inventor: REIMANN-PHILIPP, Ulrich, Norman, OK 73072 (US); ZWANZIGER, Wolfgang, Friedrich, Oklahoma City, OK 73072 (US); SCHULHOFF, Jeffrey, Oklahoma City, OK73128 (US)
(74) Representative: Eisenführ, Speiser & Partner
(86) International application number: PCT/IB2005/002477
(87) International publication number: WO 2006/021861

(56) References cited:
- WO-A-93/14181
- DE-U1- 29 805 333
- US-A- 5 776 876
- US-A- 6 139 756
- US-A1- 2002 058 605
- US-A1- 2004 105 781

## Description

### FIELD OF THE INVENTION

The present invention is generally directed toward a cleaning process. More specifically, the present invention is directed toward a process for cleaning granular water filtration media, such as various types of sand, anthracite coal or activated carbon.

### BACKGROUND OF THE INVENTION

Filtration is an essential step in the treatment of drinking and industrial water supplies. Filtration is carried out to remove contaminants which are either introduced with the source water or are produced during the treatment process and which can affect water quality. Most commonly large-scale filtration involves passing the water either through granular filter media, such as various types of sand, anthracite coal, granular activated carbon or combinations thereof arranged in layers in a filter media bed.

Contaminants removed during filtration accumulate within a granular filter media bed. Over time, this accumulation leads to increased filter backpressure (measured by increased head loss), increased turbidity of the flow-through or in the worst case scenario, to breakthrough of contaminants. Regular backwashing is used to remove accumulated filtrate in an effort to maintain filter performance and capacity.

However, like every surface in contact with water, filter media particles will over time accumulate deposits of biological and non-biological material which cannot be removed by backwashing and can significantly interfere with the filter's function. Thus, it is important to clean the filter bed not only of the loose particles removable by backwashing but also of these surface deposits.

Depending on the water source and environmental conditions, these surface deposits on the filter particles, can consist predominantly of organic matter (biofilm), metal oxides, or calcium carbonate scale. Heavy fouling or scaling will eventually reduce filter performance. The consequences can be higher backwash frequency, reduced flow-rates, increased water turbidity, breakthrough of contaminants or a combination of these effects. If the deposits are not removed, the filter performance will decline below tolerable levels and filter media exchange becomes necessary.

However, an exchange of the filtration media is very expensive in terms of filtration media and downtime cost and may not be a practical maintenance solution for water treatment installations which are exclusive to a number of consumers and have only a single filtration bed. Thus, maintenance procedures allowing for the cleaning of the filtration media as an alternative replacement are required.

Mechanical methods of filtration media cleaning include filter bed aeration during backwash and spraying water on top of the filter bed to disperse soft aggregates. This does not remove persistent surface deposits such as biofilm and scale. Chemical treatments include washing the media in strong acids and bases, sometimes in combination with surfactants. These chemical treatments can be satisfactory for certain types of contamination, such as calcium carbonate scale. However, mixed deposits, which include metal oxides and biological films, are either not removed efficiently or require highly corrosive and hazardous cleaning agents which are difficult to use and may leave residue not acceptable in drinking water processing installations. This generates a need for alternative cleaning procedures, and products, which are sufficiently efficient and convenient to present an alternative to media replacement.

Prior art filtration media cleaning methods of the chemical treatment type generally include the steps of applying an aqueous solution of a strong acid or base to the filtration media (see for example DE 29805333U1). However, the treatment liquid flows through the filtration media too quickly for the cleaning reaction to be completed. Therefore, the treatment liquid must be applied repeatedly, requiring vast amounts of treatment liquid, or the treatment liquid must be circulated through the filtration media until the clearing reaction is completed, requiring specialized and expensive circulation equipment. These approaches, although an alternative to extended plant shut-down for filter media replacement, do not offer an economical alternative to filter media replacement.

### SUMMARY OF THE INVENTION

It is an object of the present invention to provide an efficient and economical alternative to the prior art filtration media cleaning methods and products. The present invention provides a product and process for the removal of surface deposits from granular filter media. More particularly, the invention provides a product and process for the in-situ cleaning of filter media used in drinking water treatment systems, especially a product and process which is NSF certified for such use.

In a preferred embodiment, the invention is directed toward a cleaning process for the cleaning of all types of granular water filtration media, such as sand, gravel, manganese greensand, anthracite coal, granular activated carbon (GAC), and ion exchange media or ceramic beads.

The invention preferably provides a process for the *in-situ* cleaning of water filtration media contained within a filtration bed. The preferred process includes the steps of applying a granular cleaner onto the filtration media while the media is located within the filtration bed and applying an activator compound thereafter for activation of the cleaning composition. The granular cleaner reacts in conjunction with the activator resulting in the cleaning of the media. After the cleaning has occurred, the residual cleaner and activator are washed away in a rinsing step along with any suspended and dissolved contamination which was removed from the filtration media. The granular cleaner is preferably wetted after application to dissolve the cleaner and initiate the cleaning reaction.

The activator can be applied in granular or liquid form. Preferably, the activator is applied as an aqueous solution. In a variant of the preferred embodiment of the process, the steps of applying the activator and wetting the cleaner are combined by applying the activator in aqueous solution.

In another preferred embodiment, the process includes the further steps of draining the water filtration bed prior to applying the granular cleaner. Preferably, the step of wetting the granular cleaner is carried out by spraying water onto the cleaner or by filling the filtration bed with water until the cleaner is submerged. The step of rinsing the water filtration bed is preferably conducted through backwashing said filtration bed. The process preferably includes the further step of allowing the chemical reaction to proceed for at least 1 hour prior to rinsing the filtration bed. The rinsing step is preferably delayed until the dissolved cleaner has reached a bottom of the filtration bed.

In a further preferred embodiment, the process includes the additional steps of determining the degree of surface contamination of the filtration media and calculating the amount of granular cleaner to be applied for insuring removal of the surface contaminants. The determination of the degree of contamination preferably includes the steps of taking a representative core sample from the filtration media, the sample having a known volume, and the step of calculating the amount of cleaner includes the steps of measuring the amount of cleaner required for removal of the surface contaminants from the filtration media in the sample and extrapolating to the whole filtration bed by multiplying the measured amount of cleaner by the ratio of filtration bed volume/sample volume.

In a preferred embodiment of the process of the invention, the granular cleaner includes an acid component for dissolving scale and metal oxides on and removing biodeposits from the filtration media and optionally at least one component selected from the group of a free flow additive for preventing clumping of the cleaner, a surfactant for enhancing contact of the cleaner with the filtration media, an inhibitor for protecting exposed metal surfaces from corrosion by the acid component, and a dye. The cleaner is preferably in the form of a free-flowing powder with a particle size of ≤ 0.5mm for easy spreading of the cleaner on the filtration media.

In a preferred embodiment of the cleaner, the acid component is sulfamic acid. In another preferred embodiment, the granular cleaner includes at least one additional component selected from the group of citric acid, phosphoric acid, corrosion inhibitor, free-flow additive and surfactant. Preferably the granular cleaner includes the following components:

| Component | Volume (w/w) |
|---|---|
| sulfamic acid; | 50-99% |
| citric acid; | 0-10% |
| phosphoric acid; | 0-10% |
| corrosion inhibitor; | 0-10% |
| Free-flow additive; | 0-10% |
| surfactant; and | 0-10% |
| sodium bicarbonate | Balance |

In the process above, the activator used is an activated oxygen donor. For the purpose of this disclosure, the term activated oxygen donor defines compounds which in aqueous solution decompose to generate oxygen radicals. Numerous activated oxygen donors of this type are known and need not be listed in detail. The activated oxygen donor is preferably selected from peroxides, most preferably hydrogen peroxide, peracetic acid, precursors of peroxides, hydrogen peroxide and peracetic acid and combinations thereof. The activator is most preferably either 5-50% hydrogen peroxide, or 0.2 - 10% peracetic acid, or a combination of hydrogen peroxide and peracetic acid, with the balance being water.

In a preferred embodiment of the process of the invention, the activator can be in a liquid or dry state prior to its introduction into the filtration bed.

In another preferred embodiment of the process of the invention, the rinsing step is preferably carried out by a backwashing procedure.

Further objects and features of the present invention will be apparent to those skilled in the art upon reference to the accompanying drawings and upon reading the following description of the preferred embodiments.

### BRIEF DESCRIPTION OF THE DRAWINGS

Preferred embodiments of the invention will now be further described by way of example only and with reference to the attached drawings, wherein

FIG. 1 is a schematic flow diagram of a preferred process in accordance with the present invention;

FIG. 2 is a schematic flow diagram of a variant of the process of FIG.1;

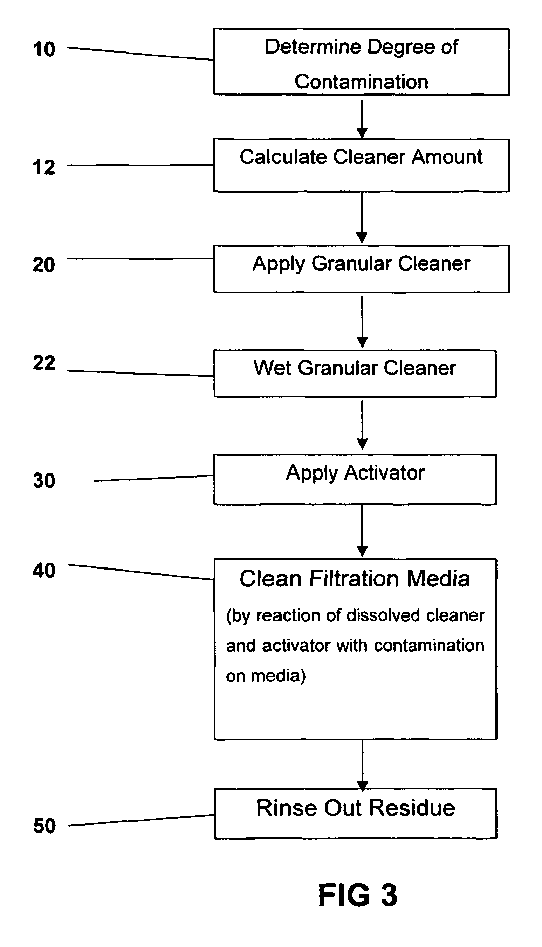

FIG. 3 is a schematic illustration of a filter bed being cleaned with the process of the invention and at commencement of the process of FIG. 1;

FIG. 4 is a schematic illustration of the filter bed of FIG. 3 at a later stage in the cleaning process; and

FIG. 5 illustrates an alternative method of applying the granular cleaner.

### DETAILED DESCRIPTION OF THE PREFERRED EMBODIMENTS

Before explaining the present invention in detail, it is to be understood that the invention is not limited to the preferred embodiments contained herein. The invention is capable of other embodiments and of being practiced or carried out in a variety of ways. It is to be understood that the phraseology and terminology employed herein are for the purpose of description and not of limitation.

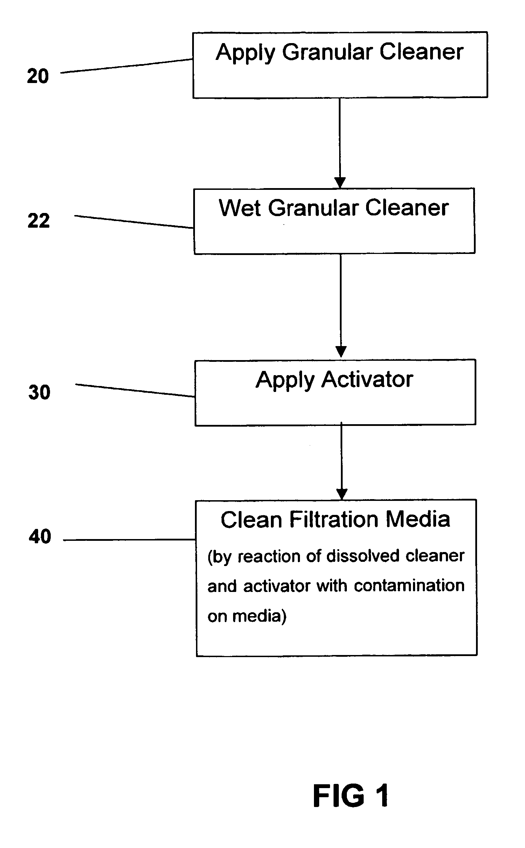

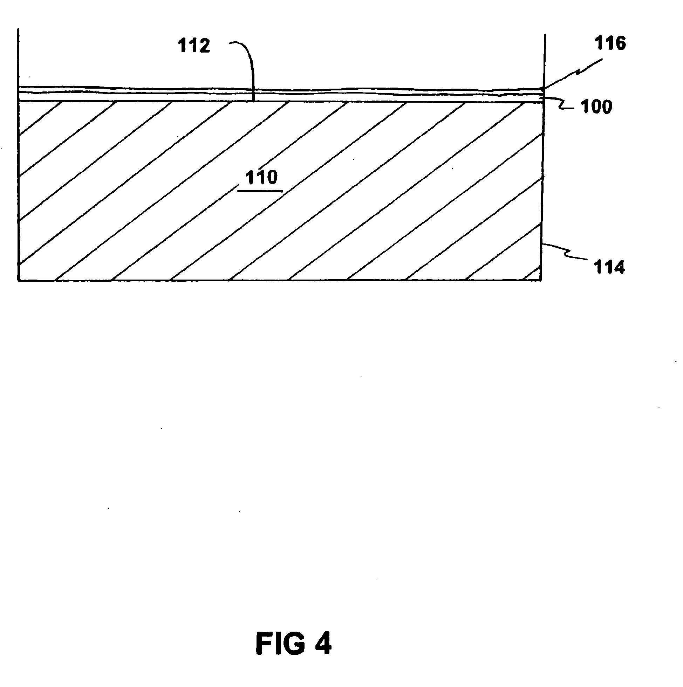

FIG. 1 is a schematic flow diagram of a preferred embodiment of a process in accordance with the invention for the cleaning of water filtration media 110 contained within a filtration bed 114 (see Fig. 4). In this embodiment, the process includes a first application step 20 in which a granular cleaner is applied to the water filtration media while the media is located within the filtration bed. In a wetting step 22, the granular cleaner is wetted with an aqueous medium to dissolve the cleaner and promote its vertical spread through the filtration media during the ensuing cleaning reaction. Thereafter, an activator is applied onto the granular cleaner in a third application step 30. In a reaction step 40, the cleaner chemically reacts in conjunction with the activator resulting in the cleaning of the media. The duration of reaction step 40 varies depending on the degree of contamination of the media. However, the reaction step 40 is preferably carried out for at least one hour, preferably the reaction step is conducted over night. Most preferably, the reaction step 40 is carried out until the dissolved cleaner has reached a bottom of the filtration bed and the filtration media is completely cleaned. The point in time at which the filtration media is completely cleaned can be determined by visual inspection to check for any foaming which would indicate an ongoing cleaning reaction and/or by measuring the supernatant pH or metal content.

The inventors of the present process surprisingly discovered that the automatic gradual advancement of the dissolved cleaner through the filtration media in combination with the even spreading of the cleaner on the top surface of the filtration bed completely obviates the need for circulation or re-circulation of the dissolved cleaner to ensure an even distribution of the dissolved cleaner during the reaction step. Agitation of the filtration bed during cleaning is also neither necessary nor desirable with the process in accordance with the invention. This provides the process of the current invention with significant economical and practical advantages.

After the cleaning step 40, any residual granular cleaner and activator are washed away along with the suspended and dissolved contamination which was removed from the water filtration media by rinsing the filtration media with water in a rinsing step 50. The rinsing step can be carried out by spraying water onto the filtration media or by backwashing the filter bed. Backwashing is the preferred method of rinsing the filtration media. The rinsing step 50 is best carried out until all residual cleaner and activator and all dissolved and suspended contaminants such as scale, metal oxides and biocontaminants have been removed. Completion of the rinsing step 50 can be determined by monitoring the turbidity, pH and dissolved metal content of the backwash water, for example. Since the filtration bed is not disturbed during the cleaning step, no settling period is required and the filtration bed can be returned to production after the rinsing step, the same as after a regular backwash cycle, providing the process of the invention with yet another advantage over prior art processes involving agitation of the filtration media during cleaning.

In the first application step 20, the granular cleaner is preferably evenly spread on the top layer of the filtration media to promote an even distribution and concentration of the dissolved cleaner during the reaction step 40. In the wetting step 30, the filtration bed is filled with water until all the filter material is submerged. This can be done by initiating a slow backwash flow until the desired water level is reached. The backwash flow should be maintained sufficiently low to avoid agitation of the filter bed and mixing of the granular cleaner with the filter material. For filters with very light filter material which may be easily agitated by backwashing, the wetting step is preferably carried out by spraying water onto the cleaner.

An even wetting of the cleaner over the whole area of the filtration media top surface is desirable in order to achieve an even dissolution and concentration of the cleaner throughout. The same applies for the activator, which is preferably evenly spread on the granular cleaner to ensure the same ratio of cleaner to activator throughout the filtration bed during the reaction step 40. The activator can be applied in granular or liquid form. When the activator is applied in granular form, the cleaner and activator may be mixed prior to application to produce a granular cleaner composition, which allows for the combination of the first and third application steps 20 and 30 into a single application step for the application of the cleaner composition. However, in the most preferred embodiment of the process, the activator is applied as an aqueous solution, which allows the compression of the steps of applying the activator and wetting the cleaner into a single second application step. In another preferred embodiment of the process of the invention the filtration bed is completely drained prior to the granular cleaner application step 20.

The rinsing step 50 is preferably conducted through backwashing of the filtration bed.

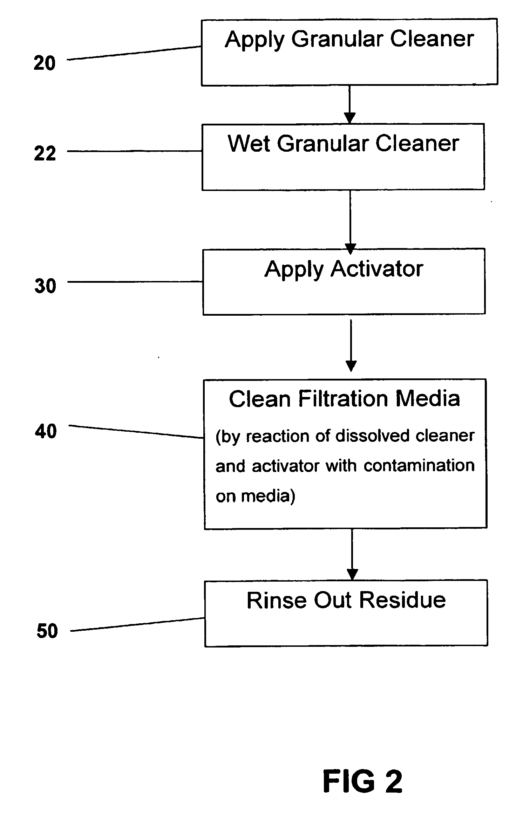

A further preferred embodiment of the process of the invention as illustrated in Fig. 2 includes an analysis step 10 for determining the degree of surface contamination of the filtration media and a calibration step 12 for calculating the amount of granular cleaner to be applied for ensuring that the whole filtration media are exposed to unreacted cleaner during the cleaning step 40. The analysis step 10 preferably includes the step of taking a representative core sample from the filtration media, the sample having a known volume, while the calibration step 12 preferably includes the steps of first measuring the amount of cleaner required for substantially complete removal of the surface contaminants from the filtration media in the sample and then extrapolating to the amount required for the whole filter bed by multiplying the measured amount of cleaner by the ratio of filtration bed volume/sample volume. Preferably, the core sample is taken in an area of maximum or at least average contamination and represents a cylindrical sample extending from the top to the bottom of the filtration bed. Adjusting the amount of cleaner used to the respective contamination conditions provides the process of the invention with a significant economical advantage, since substantially no excess cleaner will be used, reducing the cost of the cleaning materials as well as the cost of disposing any unreacted cleaner and activator. Furthermore, less backwashing is required, reducing the time required for the rinsing step 50 and, thus, the overall cleaning process. This is very important to the operator of drinking water treatment facilities who is desirous to achieve the shortest down times possible.

The granular cleaner used in the process of the invention includes an acid component for dissolving scale and metal oxides on and removing biodeposits from the filtration media; and at least one additional component selected from the group of a free flow additive for preventing clumping of the cleaner, a surfactant for reducing surface tension and enhancing contact of the cleaner with the filtration media, an inhibitor for protecting exposed metal surfaces from corrosion by the acid component, and a coloring agent.

The acid component of the preferred granular cleaner is either sulfamic acid or a combination of a major amount of sulfamic acid with a minor amount of a granular acid, such as phosphoric acid, sodium bisulfate, or citric acid. The acid component is preferably substantially free of hydrochloric acid. In the preferred embodiment, the additional components are at least one of citric acid, phosphoric acid, corrosion inhibitor, free-flow additive and surfactant.

Numerous free flow additives applicable for use in the granular cleaner of the present invention are commercially available. However, it is preferable to use inert free flow additives. Free flow additives preferred for use in a granular cleaner of the invention are fumed silicas which adsorb to the cleaner particles to inhibit clumping and are NSF certifiable for use in drinking water processing installations.

Surfactants useful for inclusion in a granular cleaner in accordance with the invention can be selected for the group of anionic, cationic, non-ionic and amphoteric surfactants in granular form. Useful anionic surfactants include, by way of non-limiting example, alkali metal salts, ammonium salts, amine salts, aminoalcohol salts, fatty acid salts. Particularly preferred surfactants are isopropanol and isobutanol. Surfactants which are NSF certifiable for use in drinking water processing installations are preferred.

Corrosion inhibitors useful for inclusion in a granular cleaner in accordance with the invention can be selected from the group of nitrogen containing organic compounds, such as amines, quaternary ammonium compounds, heterocyclic nitrogen compounds, urea, thiourea, amide, or mixtures thereof. The most preferred inhibitors are Inhibitor 60S, commercially available from Thoma, Inc. and Rodine 102, from Parker Amchem.

Numerous coloring agents useful for inclusion in the granular cleaner of the invention are commercially available. The preferred coloring agent is a dye commercially available under the name Phylam Acid Red LX-6515 from Phylam Chemicals.

In the process above, the activator used is an activated oxygen donor, preferably selected from hydrogen peroxide, peracetic acid, precursors of hydrogen peroxide and peracetic acid and combinations thereof. Examples of granular precursors of activated oxygen donors are sodium percarbonate and BSC 8080, available from Buckman Laboratories. The activator is preferably either 5-50% hydrogen peroxide, or 0.2 - 10% peracetic acid with the balance being water. The activator can be in a liquid or dry state prior to its introduction into the filtration bed.

The cleaner in accordance with the invention preferably includes the following components at the indicated amounts:

| Component | Volume w/w |
|---|---|
| sulfamic acid; | 50-100% |
| citric acid; | 0-30% |
| phosphoric acid; | 0-10% |
| sodium bisulfate | 0-10% |
| corrosion inhibitor; | 0-10% |
| free-flow additive; | 0-10% |
| surfactant | 0-10% |

As will be readily understood from the indicated volume ranges, all components having a volume range with a lower value of 0 are optional components.

The mineral or organic acid components of the granular cleaner composition of the invention are present in their respective crystalline form.

Although the granular cleaner composition is preferably in the form of a free-flowing powder with a particle size of ≤ 0.5mm for ease of spreading of the cleaner on the filtration media, the granular cleaner may also be in the form of compressed pellets or granules, especially for application in the form of a slurry, as will be described in more detail further below.

Exemplary formulations illustrating preferred embodiments of the above general cleaner formulation are described in detail in the following:

### Example 1

| Component | Volume w/w |
|---|---|
| sulfamic acid | 85.5% |
| citric acid | 5.0% |
| phosphoric acid | 5.0% |
| corrosion inhibitor | 1.5% |
| Free-flow additive | 1.0% |
| surfactant | 2.0% |

### Example 2

| Component | Volume w/w |
|---|---|
| sulfamic acid | 65.5% |
| citric acid | 25.0% |
| phosphoric acid | 5.0% |
| corrosion inhibitor | 1.5% |
| Free-flow additive | 1.0% |
| surfactant | 2.0% |

### Example 3

| Component | Volume w/w |
|---|---|
| sulfamic acid | 65.5% |
| citric acid | 25.0% |
| sodium bisulfate | 5.0% |
| corrosion inhibitor | 1.5% |
| Free-flow additive | 1.0% |
| surfactant | 2.0% |

The constituents of the granular cleaners described herein are known in the art and are commercially available from various sources including those described in McCutcheon's Functional Materials (Vol.2), North American Edition, 1991; and in Kirk-Othmer, Encyclopedia of Chemical Technology, 3rd edition, Vol. 22, the contents of which are herein incorporated by reference. For any particular cleaner, the optional components used should be compatible with all other ingredients included in the cleaner.

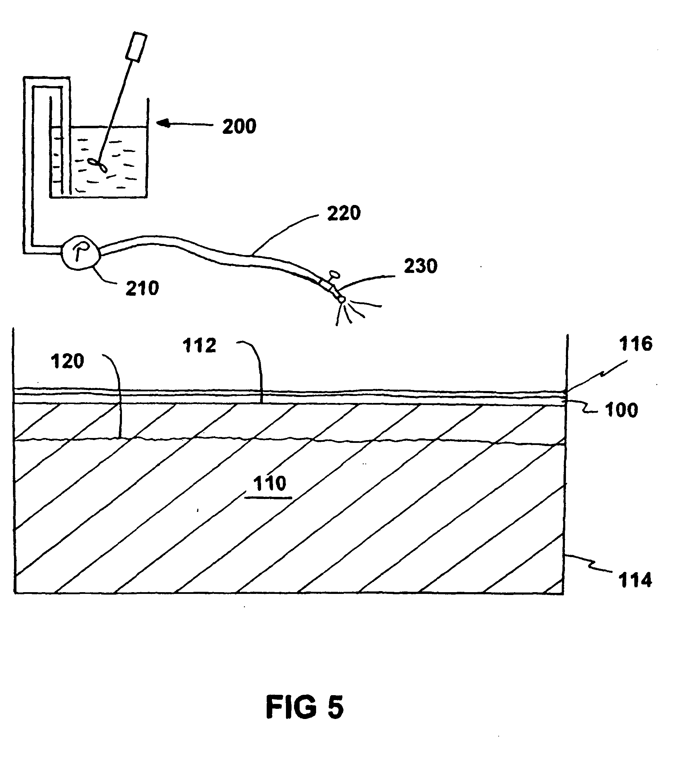

As shown in FIG. 4, the granular cleaner 100 in a preferred embodiment of the process of the invention is spread evenly on the top surface 112 of the filtration media 110 in the filtration bed 114 during the first application step 10 (see FIG. 1). The cleaner 100 is wetted to achieve dissolution of the cleaner. The activator 116 is then evenly spread on top of the cleaner 100 either in granular or liquid form. The dissolved cleaner and the activator together move downward through the filtration bed 114. This generates a moving cleaning front 120 of concentrated acid and activator as shown in FIG. 5 which illustrates the filtration bed 114 during the reaction step 40 (see FIG. 1). The cleaning front 120 is the front edge of the dissolved cleaner/activator mixture. The cleaning front 120 normally advances through the filtration bed 114 at a constant speed which is dependent on the type and particle size of the filtration media 110, the degree of media contamination and the cleaning chemical dosage. In stratified filter beds including several strata of different filtration media, the speed of advance of the cleaning front 120 may change from one stratum to the next, again depending on the properties of the filtration media in the adjacent strata. Not only will the cleaning front 120 and, thus, the dissolved cleaner 100 and the activator 116, automatically move through the filtration bed 114, the even application of both together with the movement of the mixture around the filtration media particles ensures an even concentration and admixture of both components. Furthermore, the advancement of the cleaning front 120 is slowed sufficiently by the friction created during movement of the mixture though the filtration bed 114 to achieve more than sufficient residence time of the mixture on the filtration media particles to ensure a full cleaning thereof. Moreover, any unreacted mixture will continue to move downward until it comes in contact with a contaminated filtration media surface or the filtration bed 114 is completely cleaned. This provides several significant advantages over the prior art. The circulation equipment required with the prior art cleaning processes using liquid cleaning compositions to ensure complete spread of the cleaner and sufficient residence time is obviated with the process of the present invention, resulting in a significant economical advantage. Significant overdosing of the cleaning compounds as required in the prior art cleaning processes to ensure all contamination is removed is not necessary with the process of the invention, since all of the cleaning mixture will 'drain' from the filtration bed, which means it will automatically move through the whole bed and can get used up completely. Additional advantages of the present method over the prior art are a minimized corrosion of metal parts and minimized formation of hazardous fumes.

For large filtration beds, where it may be difficult to reach all locations of the bed's top surface, it may be challenging to spread the granular cleaner or granular cleaner composition in a dry form as described above. In those situations, the granular cleaner can be applied to the filtration media in the form of a slurry. The slurry is prepared by mixing the dry granular cleaner or cleaner composition with approximately the same volume of water at a mixing station 200 (see Fig.5) and then spread on the top surface of the filtration bed by way of a pressure pump 210 connected to the mixing station 200, delivery hoses 220 emanating from the pump 210 and an optional spreader nozzle 230. The granular cleaner shipping containers can be used as the mixing station 220 by filling the containers with water to the top. Various types of slurry mixing and pumping equipment are commercially available and need not be described in more detail herein.

While the invention has been described with a certain degree of particularity, it is understood that the invention is not limited to the embodiments set forth herein for purposes of exemplification, but is to be limited only by the scope of the attached claims or including the full range of equivalency to which each element thereof is entitled.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A process for removing surface contaminants from water filtration media contained in a water filtration bed, comprising the steps of:
applying a granular cleaner onto said water filtration bed;
wetting the granular cleaner for permitting the granular cleaner to dissolve and being vertically moved through the filtration media;
applying an active oxygen donor activator to said water filtration bed for initiating a chemical reaction between the granular cleaner, the activator and the surface contaminants on the water filtration media; and
rinsing the filtration bed with water for removing residual granular cleaner and residual activator along with suspended and dissolved contamination from the water filtration media.

2. The process of claim 1 wherein said activator is applied in granular or liquid form.

3. The process of claim 2 wherein the activator is applied as an aqueous liquid.

4. The process of claim 1, wherein the steps of applying the activator and wetting the deaner are carried out by applying an activator in aqueous liquid form.

5. The process of claim 1, further comprising the step of draining the water filtration bed prior to applying the granular cleaner.

6. The process of claim 5, wherein the step of wetting the granular cleaner is carried out by spraying water onto the cleaner or by filling the filtration bed with water until the cleaner is submerged.

7. The process of claim 1, wherein the step of rinsing the water filtration bed is conducted through backwashing said filtration bed without agitating the filter media.

8. The process of claim 1, further comprising the step of allowing the chemical reaction to proceed for at least 1 hour prior to rinsing the filtration bed.

9. The process of claim 1, wherein the rinsing step is delayed until the dissolved cleaner has reached a bottom of the filtration bed.

10. The process of claim 1, comprising the further steps of determining the degree of surface contamination of the filtration media and calculating the amount of granular cleaner to be applied for insuring removal of the surface contaminants.

11. The process of claim 10, wherein the step of determining the degree of contamination includes the steps of taking a representative core sample from the filtration media, the sample having a known volume, and the step of calculating the amount of cleaner includes the steps of measuring the amount of cleaner required for removal of the surface contaminants from the filtration media in the sample and multiplying the measured amount of cleaner by the ratio of filtration bed volume/sample volume.

12. The process of claim 1, wherein the granular cleaner is used for cleaning a water filtration bed including at least one of sand, gravel, manganese greensand, and an**thracite.**

13. The process of claim 1, wherein the granular cleaner is used for cleaning a water filtration bed including granular activated carbon (GAC).

14. The process of claim 1, wherein the granular cleaner is used for cleaning a water fltration bed including ion exchange media.

15. The process of claim 1, wherein the granular cleaner is used for cleaning a water filtration bed including ceramic beads.

## Patentansprüche

1. Verfahren zum Entfernen von Oberflächenkontaminanten aus Wasserfiltrationsmedien, die in einem Wasserfiltrationsbett enthalten sind, umfassend die Schritte des:
Aufbringens eines granulären Reinigungsmittels auf das Wasserfiltrationsbett;
Benetzens des granulären Reinigungsmittels, um zu gestatten, dass das granuläre Reinigungsmittel sich löst und vertikal durch die Filtrationsmedien bewegt wird;
Aufbringens eines Aktivsauerstoffdonor-Aktivators auf das Wasserfiltrationsbett, um eine chemische Reaktion zwischen dem granulären Reinigungsmittel, dem Aktivator und den Oberflächenkontaminanten auf den Wasserfiltrationsmedien auszulösen; und
Spülens des Filtrationsbetts mit Wasser, um restliches granuläres Reinigungsmittel und restlichen Aktivator zusammen mit suspendierter und gelöster Kontamination aus dem Wasserfiltrationsmedium zu entfernen.

2. Verfahren nach Anspruch 1, wobei der Aktivator in granulärer oder flüssiger Form aufgebracht wird.

3. Verfahren nach Anspruch 2, wobei der Aktivator als wässrige Flüssigkeit aufgebracht wird.

4. Verfahren nach Anspruch 1, wobei die Schritte des Aufbringens des Aktivators und Benetzens des Reinigungsmittels durch Aufbringen eines Aktivators in wässriger, flüssiger Form durchgeführt werden.

5. Verfahren nach Anspruch 1, des Weiteren den Schritt des Entwässerns des Wasserfiltrationsbetts vor dem Aufbringen des granulären Reinigungsmittels umfassend.

6. Verfahren nach Anspruch 5, wobei der Schritt des Benetzens des granulären Reinigungsmittels durch Sprühen von Wasser auf das Reinigungsmittel oder durch Füllen des Filtrationsbetts mit Wasser, bis das Reinigungsmittel untergetaucht ist, durchgeführt wird.

7. Verfahren nach Anspruch 1, wobei der Schritt des Spülens des Wasserfiltrationsbetts durch Rückspülen des Filtrationsbetts, ohne die Filtermedien aufzurühren, durchgeführt wird.

8. Verfahren nach Anspruch 1, des Weiteren den Schritt des Gestattens umfassend, dass die chemische Reaktion mindestens 1 Stunde lang vor dem Spülen des Filtrationsbetts vorsichgeht.

9. Verfahren nach Anspruch 1, wobei der Spülschritt aufgeschoben wird, bis das gelöste Reinigungsmittel einen Boden des Filtrationsbetts erreicht hat.

10. Verfahren nach Anspruch 1, umfassend die weiteren Schritte des Bestimmens des Grads der Oberflächenkontamination der Filtrationsmedien und des Berechnens der Menge an granulärem Reinigungsmittel, das aufgebracht werden muss, um die Entfernung der Oberflächenkontaminanten sicherzustellen.

11. Verfahren nach Anspruch 10, wobei der Schritt des Bestimmens des Kontaminationsgrads die Schritte des Abnehmens einer repräsentativen Kernprobe aus den Filtratlonsmedien umfasst, wobei die Probe ein bekanntes Volumen aufweist, und der Schritt des Berechnens der Menge an Reinigungsmittel die Schritte des Messens der Menge an Reinigungsmittel, die für das Entfernen der Oberflächenkontaminanten von den Fiitrationsmedien in der Probe erforderlich ist, und des Multiplizierens der gemessenen Menge an Reinigungsmittel mit dem Verhältnis des Filtrationsbettvolumens/Probevolumens umfasst.

12. Verfahren nach Anspruch 1, wobei das granuläre Reinigungsmittel zum Reinigen eines Wasserfiltrationsbetts verwendet wird, das mindestens eines von Sand, Kies, Mangangrünsand und Antracit umfasst.

13. Verfahren nach Anspruch 1, wobei das granuläre Reinigungsmittel zum Reinigen eines Wasserfiltrationsbetts verwendet wird, das granuläre Aktivkohle (GAK) umfasst.

14. Verfahren nach Anspruch 1, wobei das granuläre Reinigungsmittel zum Reinigen eines Wasserfiltrationsbetts verwendet wird, das Ionenaustauschmedien umfasst.

15. Verfahren nach Anspruch 1, wobei das granuläre Reinigungsmittel zum Reinigen eines Wasserfiltrationsbetts verwendet wird, das Keramikperlen umfasst.

## Revendications

1. Procédé d'élimination de contaminants de surface de milieux de filtration de l'eau contenus dans un lit de filtration de l'eau, comprenant les étapes suivantes :
application d'un nettoyant granulaire sur ledit lit de filtration d'eau ;
mouillage du nettoyant granulaire pour permettre au nettoyant granulaire de se dissoudre et d'être déplacé verticalement à travers le milieu de filtration ;
application d'un activateur donneur d'oxygène actif au lit de filtration d'eau afin de déclencher une réaction chimique entre le nettoyant granulaire, l'activateur et les contaminants de surface sur les milieux de filtration d'eau ; et
rincer le lit de filtration avec de l'eau afin d'éliminer le nettoyant granulaire résiduel et l'activateur résiduel avec la contamination en suspension et dissoute des milieux de filtration d'eau.

2. Procédé selon la revendication 1, dans lequel ledit activateur est appliqué sous forme granulaire ou liquide.

3. Procédé selon la revendication 2, dans lequel l'activateur est appliqué sous la forme d'un liquide aqueux.

4. Procédé selon la revendication 1, dans lequel les étapes d'application de l'activateur et de mouillage du nettoyant sont réalisées en appliquant un activateur sous forme liquide aqueuse.

5. Procédé selon la revendication 1, comprenant en outre l'étape de drainage du lit de filtration d'eau avant d'appliquer le nettoyant granulaire.

6. Procédé selon la revendication 5, dans lequel l'étape de mouillage du nettoyant granulaire est réalisée en pulvérisant de l'eau sur le nettoyant ou en remplissant le lit de filtration avec de l'eau jusqu'à ce que le nettoyant soit submergé.

7. Procédé selon la revendication 1, dans lequel l'étape de rinçage du lit de filtration d'eau est réalisée en lavant à contre-courant ledit lit de filtration sans agiter les milieux de filtration.

8. Procédé selon la revendication 1, comprenant en outre l'étape consistant à laisser la réaction chimique se dérouler pendant au moins 1 heure avant de rincer le lit de filtration.

9. Procédé selon la revendication 1, dans lequel l'étape de rinçage est reportée jusqu'à que le nettoyant dissout ait atteint un fond du lit de filtration.

10. Procédé selon la revendication 1, comprenant les étapes supplémentaires de détermination du degré de contamination de surface des milieux de filtration et de calcul de la quantité de nettoyant granulaire devant être appliquée afin d'assurer une élimination des contaminants de surface.

11. Procédé selon la revendication 10, dans lequel l'étape de détermination du degré de contamination comprend les étapes de prélèvement d'un échantillon de carotte des milieux de filtration, l'échantillon ayant un volume connu, et l'étape de calcul de la quantité de nettoyant comprend les étapes de mesure de la quantité de nettoyant nécessaire pour l'élimination des contaminants de surface des milieux de filtration dans l'échantillon et de multiplication de la quantité mesurée de nettoyant par le rapport volume de lit de filtration / volume d'échantillon.

12. Procédé selon la revendication 1, dans lequel le nettoyant granulaire est utilisé pour nettoyer un lit de filtration d'eau comprenant au moins un parmi le sable, le gravier, le sable vert au manganèse et l'anthracite.

13. Procédé selon la revendication 1, dans lequel le nettoyant granulaire est utilisé pour nettoyer un lit de filtration comprenant du charbon actif granulaire (CAG).

14. Procédé selon la revendication 1, dans lequel le nettoyant granulaire est utilisé pour nettoyer un lit de filtration d'eau comprenant des milieux échangeurs d'ions.

15. Procédé selon la revendication 1, dans lequel le nettoyant granulaire est utilisé pour nettoyer un lit de filtration comprenant des billes en céramique.
